(19)

**Europäisches Patentamt**
**European Patent Office**
**Office européen des brevets**

(11) **EP 2 963 564 A1**

(12) **EUROPEAN PATENT APPLICATION**

(43) Date of publication:
06.01.2016 Bulletin 2016/01

(51) Int Cl.:
*G06F 17/30* $^{(2006.01)}$

(21) Application number: 14175793.0

(22) Date of filing: 04.07.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Gottfried Wilhelm Leibniz Universität Hannover**
**30167 Hannover (DE)**

(72) Inventors:
• **Zhu, Xiaofei**
**30177 Hannover (DE)**

• **Nejdl, Wolfgang**
**30163 Hannover (DE)**
• **Georgescu, Mihai**
**30167 Hannover (DE)**

(74) Representative: **Aisch, Sebastian**
**Gramm, Lins & Partner**
**Patent- und Rechtsanwälte PartGmbB**
**Freundallee 13 a**
**30173 Hannover (DE)**

(54) **Method for determining the relevance of a tag**

(57) The invention relates to a method for determining the relevance of a tag relating to the visual content of images annotated with said tag. At first, all tagged images annotated with said tag are identified. Then, a predefined number of nearest visual neighbors is determined for each image of said tagged images. Based on these, a voting graph is constructed, whereby relationship between two tagged images exists, if one tagged image appears in the nearest visual neighbors of the other tagged image. Based on the voting graph, a random walk model is performed to calculate a relevant score for said tag for each tagged image.

Figure 1

**Description**

The invention relates to a method for determining the relevance of a tag relating to the visual content of images annotated with said tag. The invention relates also to a computer programme performing the inventive method.

The work leading to this invention has received funding from the European Union 7th Framework Programme (FP7/2007-2013) under Ground Agreement No. 287704.

With the advance of social media sharing platforms, users are allowed to up-load personalized photos and annotate these photos with freely chosen tags. These users contributed tags bring a new way to retrieve and organize the huge volume of photos available online, and recently have attracted increasing attention among the research and commercial communities.

However, the most user contributed tags are not consistent in syntax and semantic, which makes it an obstacle to utilize tag information for image retrieval and organization. Moreover, another obstacle is the lack of relevance information in the tag list of images. To increase the quality of retrieval and organization of images by the tag list of each image, it is necessary to choose tags for each image which are most relevant regarding to the visual content of the image.

A fundamental problem is how to accurately and efficiently learn the relevance of a tag with respect to the visual content the tag is describing. A tag is considered as more relevant for an image if the tag more accurately describes objective aspects of the visual content of the image. For simplicity, hereafter the term "the tag relevance" means "the relevance of tag with respect to the image that the tag is describing".

It is an object of the present invention to represent novel method for determining the relevance of a tag relating to the visual content of images annotated with said tag to increase the quality of relevance according to the correctness of the tag description and the visual content of the image.

The problem is solved by the method of patent claim 1 and a computer programme of patent claim 8.

The basic assumption of these method is that a tag is considered as relevant to the visual content of the target image if these tag is also used to annotate the visual neighbor images of the target image. A relationship among images is constructed as a voting graph, and then the tag relevance with respect to the image that the tag is describing is learned by using a random walk process (random walk model) to score the tag relevance of each image.

Relating to claim 1, in the first step all tagged images annotated with said tag are identified from an entire set of images. The result of step a.) is list of tagged images annotated with said tag so that these result list only contains tagged images and does not contain untagged images which are not tagged with said tag.

In the next step, for each image of said tagged images a predefined number of nearest visual neighbors are determined. The visual similarity between two images could be a Gaussian kernel function like:

$$\omega_{ij} = e\chi p\left( -\frac{\left\|\chi_i - \chi_j\right\|_2^2}{\sigma^2} \right)$$

whereby $x_i$, $x_j$ are the images, $\sigma$ are a radius parameter and where $\|.\|2$ denotes the L2-norm.

In the next step, based on the identified tagged images and the nearest visual neighbors, a voting graph is constructed. The voting graph includes the identified tagged images as nodes and represents a relationship between two tagged images as edges. A relationship between two tagged images (between two nodes) exists, if the second tagged image of the two tagged images appears in the nearest visual neighbors of the first tagged image. In other words, there is a direct edge from the second node j to the first node i if and only if node j appears in the k visual nearest neighbors of node i. The k visual nearest neighbors of node i is calculated in step b.) for the entire image set, which means it can contain both tagged and untagged images. These can be interpreted in that image j will compete with all other images in the image set including both tagged and untagged images, and there is a direct edge from node j to node i only when j can win a position in the k visual nearest neighbors of node i.

After constructing the voting graph, the voting graph includes only tagged images annotated with the relevant tag. The edges between the nodes are describing the relationship between tow nodes with respect to their visual similarity. Therefore, the voting graph uses only images annotated by the given tag as nodes.

In the last step, a relevance score for said tag for each tagged image is calculated with respect to the visual content of said tagged image that performing a random walk model over said voting graph. The behaviour of the random walk model is defined by two probabilities: a following probability and a teleporting probability. The following probability (likelihood) defines the probability to follow from a start node j to another node i via an edge of the voting graph (the other node i is also called out-link neighbor) whereby the teleporting probability defines the probability to teleport from said start node (j) to a random node of said voting graph.

During the following an edge, a scoring is made on the destination node to determine the relevance of the tag relating to the visual content of the image. In general, in the random walk model, a walker can either follow an out-link (edge) with a probability $\alpha$ or teleport to a random node with probability 1-$\alpha$.

The steps of the inventive method is performed by a computing unit.

In an embodiment, the visual similarity between two images is calculated by Gaussian kernel function, for example

$$\omega_{ij} = e\chi p\left( -\frac{\left\| \chi_i - \chi_j \right\|_2^2}{\sigma^2} \right).$$

In a preferred embodiment, said teleporting probability of said random walk model depends from the numbers of edges of the start node of said voting graph. That reflects that a tag annotated an image with many out-linked neighbors in the graph is more relevant for these image than a node with less out-linked neighbors.

In a preferred embodiment, said teleporting probability of said random walk model is calculated by

$$(1-\alpha)+(1-c_i)\times\alpha$$

with

$$c_i = \frac{\left(d_i^+\right)^\gamma}{\max_j\left(d_j^+\right)^\gamma}$$

whereby $\alpha$ is said following probability, $d_i^+$ is the number of edges of said start node i, $d_j^+$ is the number of edges of another node j and $\gamma$ is a control factor to control the degree of the impact of the number of edges. In these embodiment, the random walk model is called adaptive teleportation random walk model.

The factor $c_i$ is called confidence factor and is inventively introduced in the standard random walk process. The confidence factor reflects what proportion of the score of a node is used for voting its out-linked neighbors. To be precise, nodes with a large number of out-linked neighbors where comparably devote larger scores for voting on their out-linked neighbors than nodes with less out-linked neighbors. The factor $\gamma$ in the confidence factor is introduced to control the degree of the impact of the number of out-linked neighbors. When $\gamma=1$, the confidence factor $c_i$ is proportional to the number of out-linked neighbors of i. When $\gamma=0$, the random walk model will regress to PageRank, where all nodes have the uniform confidence, for example $c_i=1$. If $0<\gamma<1$, the nodes with a smaller number of out-linked neighbors will be boosted to have relatively higher confidence values. If $\gamma>1$, the nodes with a large number of out-linked neighbors will be boosted to have relatively higher confidence values.

In a preferred embodiment, $\gamma$ is set to 1.

Formally, the teleportation probability of node i is equal to

$$(1-\alpha)+(1-c_i)\times\alpha$$

where the first item can be considered as the prior teleporting probability which is identical for all nodes, and the second term can be considered as the observed teleporting probability which relies on the confidence factor $c_i$ of the node i. The combined teleporting probability can be seen as a posterior probability.

Intuitively, the adapted teleporting process can be explained as follows: when the current node has a high confidence factor $c_i$, then walkers will follow the out-links (edges) with a higher probability and contribute most of the voting impact to its out-linked neighbors. Otherwise, walkers will more likely teleport to a random node, and devote less voting impact to out-linked neighbors in order to reduce the risk of incorrect voting.

In a preferred embodiment, the process of said random walk model is calculated by

$$r_t(j) = \alpha \sum_i c_i P_{ij} r_{t-1}(i) + \alpha v_j \sum_i (1-c_i) r_{t-1}(i) + (1-\alpha) v_j$$

with

$$p_{ij} = \frac{\omega_{ij}}{\sum_{\kappa \in N_\kappa(i)} \omega_{i\kappa}}$$

$$c_i = \frac{\left(d_i^+\right)^\gamma}{\max_j \left(d_j^+\right)^\gamma}$$

whereby i is the start node, j is another node, $r_t$ is a vector whose i-th element $r_t(i)$ indicates the relevance score of node i at step t, $\alpha$ is said following probability, $v_j$ is the initial probabilistic relevance score of tag t at node j, P is an n-by-n transition matrix with an element $p_{ij}$ indicates the probability of transition from node i to node j, $w_{ij}$ is an edge-weight between node i and j and $N_k(i)$ is the k-nearest visual neighbors of node i. $c_i$ is the confidence factor defined aforementioned.

In a preferred embodiment, the edge-weight between two nodes of said voting graph is constant over the entire voting graph.

In a preferred embodiment, the edge-weight between two nodes of said voting graph is calculated form the visual similarity of said two nodes, for example by a Gaussian kernel function.

It is worth noting that the new random walk process still converges to a stationary distribution. Let A denote the diagonal matrix with diagonal elements equal to $(c_1, c_2, ...c, c_n)$. Let $e = (1, 1, ..., 1)^T$ denote the vector of all ones, where the superscript T denotes the transpose. Let I denote the $n \times n$ identity matrix, and let $v = (v_1, v_2,...,v_n)^T$. Hereafter, we will prove the convergence property of the iteration of $r_t(j)$.

LEMMA 1. For all P, $\alpha$, $\Lambda$ and v, $(I-\alpha(P^T\Lambda + v_e^T(I - \Lambda)))$ is invertible.

PROOF. Let $Q = P^T\Lambda + ve^T(I-\Lambda)$, then we should prove that $(I-\alpha Q)$ is invertible. It is equivalent to prove that its transpose $(I-\alpha Q^T)$ is invertible. For this purpose, we need prove that $(I-\alpha Q^T)x = 0$ has a trivial solution $x = 0$.

$$\left(I - \alpha Q^T\right)x = 0$$

$$x = \alpha Q^T x$$
$$\chi_i = \alpha \sum_j Q_{ji} \chi_j$$

$$= \alpha \sum_j \left(c_i P_{ij} + (1-c_i) v_j\right) \chi_j$$

Note that $0 \le c_i P_{ij} + (1-c_i) v_j \le 1 \forall i,j$ (since $\min\{P_{ij}, v_j\} \le c_i P_{ij} + (1-c_i) v_j \le \max\{P_i, v_j\}$), and $\sum_j(c_i P_{ij}+(1-c_i)v_j)=c_i\sum_j Pij+(1-c_i)\sum_j v_j=1\forall j$. Let $m$=arg max$\{\chi_i\}$, $\chi_m = \alpha\sum_j(c_m P_{mj}+(1-c_m)v_j)\chi_j \ge \alpha\sum_j(c_m P_{mj}+(1-c_m)v_j)\chi_m=\alpha\chi_m$. Thus, $(1-\alpha)\chi_m \ge 0$ and $\chi_m \ge 0$. Similarly, let M=arg max$\{\chi_i\}$, we also have $(1-\alpha)\chi_m \le 0$ and $\chi_m \le 0$. Thus $\chi_i = 0 \forall i$.

THEOREM 2. The iteration of $r_t(j)$ converges to

$$r_\pi = (1-\alpha)\left(I - \alpha\left(P^T\Lambda + ve^T(I-\Lambda)\right)\right)^{-1} v$$

PROF. $r_t(j)$ can be rewritten in the matrix form

$$r_t = \alpha P^T \Lambda r_{t-1} + \alpha e^T(I - \Lambda)r_{t-1}v + (1 - \alpha)v$$

$$= \alpha P^T \Lambda r_{t-1} + \alpha v e^T(I - \Lambda)r_{t-1} + (1 - \alpha)v$$

$$= \alpha(P^T \Lambda + v e^T(I - \Lambda))r_{t-1} + (1 - \alpha)v$$

Let $Q = P^T\Lambda + ve^T(I-\Lambda)$, then we have

$$r_\pi = {}_n\underline{\lim}_\infty (\alpha Q)^n r_0 + (1 - \alpha)\left(\sum_{i=1}^{n}(\alpha Q)^{i-1}\right)v$$

Note that transition matrix P has been row normalized to 1, and $v$ is the probabilistic relevance score (i.e., $\sum_i v_i = 1$). For $0 < \alpha < 1$, there exists $\delta < 1$, such that $\alpha < \delta$, and we can derive that

$$\sum_i (\alpha Q)^n_{ij} = \sum_i \sum_k (\alpha Q)_{ik}(\alpha Q)^{n-1}_{kl}$$

$$= \sum_k (\alpha Q)^{n-1}_{kj}\sum_i (\alpha Q)_{ik}$$

$$= \sum_k (\alpha Q)^{n-1}_{kj}\alpha\sum_i (c_k P_{ki} + (1 - c_k)v_i)$$

$$= \sum_k (\alpha Q)^{n-1}_{kj}\alpha(c_k \sum_i P_{ki} + (1 - c_k)\sum_i vi)$$

$$= \sum_k (\alpha Q)^{n-1}_{kj}(\alpha)$$

$$\leq \sum_k (\alpha Q)^{n-1}_{kj}(\delta)$$

$$\leq \delta^n$$

Thus the column sums of $(\alpha Q)^n$ converges to zero. Then according to $r_\pi$ and Lemma 1 we have

$$r_\pi = (1-\alpha)(\mathrm{I} - \alpha Q)^{-1} v$$

$$= (1-\alpha)(\mathrm{I} - \alpha(\mathrm{P}^{\mathrm{T}}\Lambda + v e^{\mathrm{T}}(\mathrm{I}-\Lambda)))^{-1} v$$

which is the unique stationary distribution.

The parameter k represents the number of nearest neighbors considered, and controls the density of the voting graph. When k is small, less edges are generated for building the voting graph. However, when k becomes large, the constructed voting graph will have more edges and becomes denser. When k becomes too large, noisy relationship would be introduced into the voting graph and hurt the performance. It is preferable, when the number of nearest neighbors k is between 100 and 400, especially 100 and 200.

The parameter $\gamma$ controls how the number of out-linked neighbors affect the confidence value. The best setting for $\gamma$ is 1 which indicates that the confidence value of each node should be linear proportional to the number of its out-linked neighbors.

The parameter $\alpha$ can be considered as a parameter which controls the prior teleportion probability. However, the method are not very sensitive to $\alpha$ as compared with the case of standard random walk model because in the random walk model the teleporting probability is exclusively determined by $\alpha$, while in the inventive method these probability will be characterized by both parameters $\alpha$ and $\gamma$.

The parameter $\sigma$ will affect the sensitivity of the similarity measure. When $\sigma$ is small, neighbor images which are very close to the target image will have a larger similarity, this have more voting power in wided width version method. In the contrary, when $\sigma$ is large, almost all neighbor images will have a similar voting powers. At the extreme, $\sigma$ can be set to infinity which only result in all neighbor images have equal voting power. The optimal value of $\sigma$ is around the average or clearly distance of all images in each data set.

More detailed description is given by the figures.

Figure 1:    an illustration of the k nearest neighbors;
Figure 2:    an illustration of the voting graph construction.

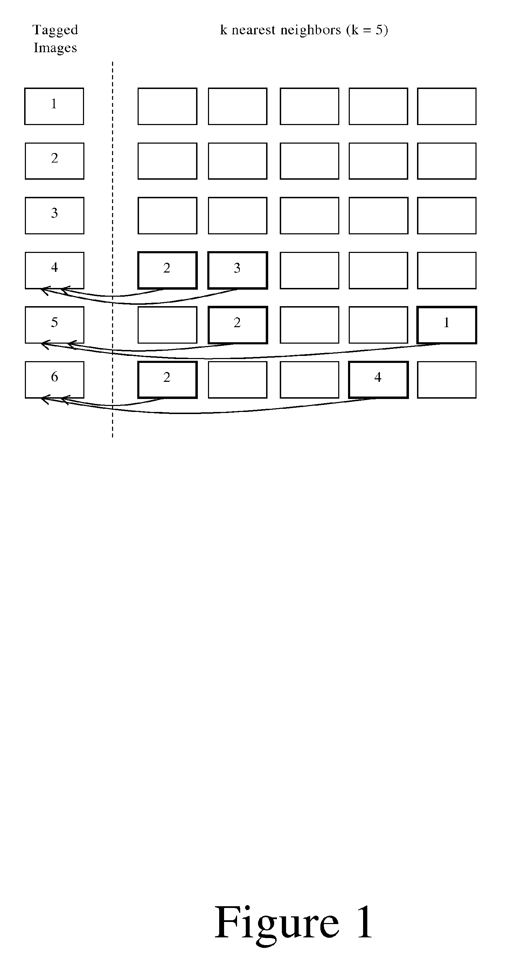

Figure 1 shows the k nearest neighbors j relating to a tagged image i. Images on the left side of the vertical dashed line are tagged images, for example images annotated with a given tag "k". The corresponding images on the right side to each tagged image on the left side corresponds to their k nearest neighbors based on their visual similarity. The k nearest neighbors on the right side of the dashed line are including tagged and untagged images.

A relationship between the tagged image on the left side and the corresponding k nearest neighbors on the right side is given, if a tagged image from the left side appears in said nearest visual neighbors of the corresponding tagged image.

In other words, if an image from the right side appears in the list of tagged images from the left side, a relationship to the correspondent tagged image to the left side exists. In figure 1, image 2 (is listed in the tagged images on the left side) is in the k nearest neighbors of image 4, so that a relationship between image 2 and image 4 exists.

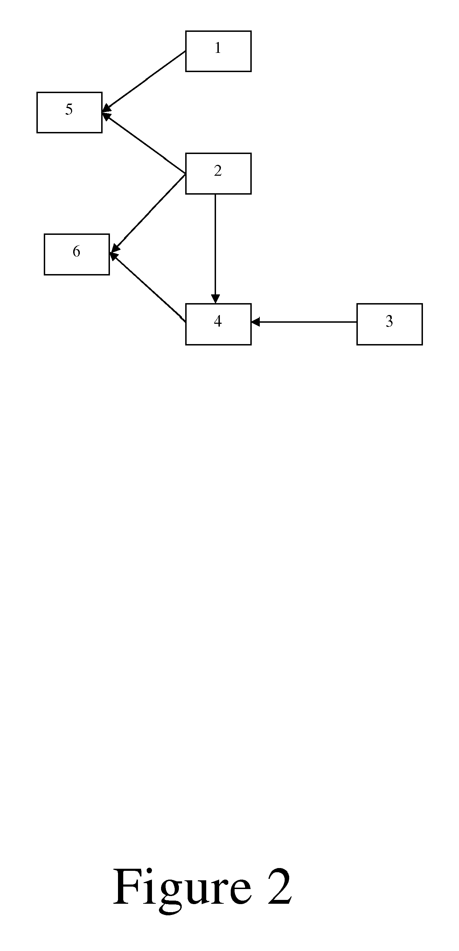

Based on these relationship and the tagged images on the left side in figure 1, the voting graph is constructed, showing in figure 2. Each node indicates the tagged image, the presence of a directed edge from node i to node j shows that image i appears in k(j). Based on these voting graph, a random walk model is performed.

**Claims**

1.  Method for determining the relevance of a tag (t) relating to the visual content of images annotated with said tag, comprising the steps:

    a.) Identifying all tagged images (T) annotated with said tag (t) from an entire set of images;
    b.) Determining for each image (j) of said tagged images (T) a predefined number (k) of nearest visual neighbors $(N_k(j))$;
    c.) Constructing a voting graph by representing said tagged images (T) as nodes of the voting graph and by representing a relationship between two tagged images (j, i) of said tagged images (T) as edges of the voting graph, whereby a relationship between the two tagged images (j, i) exists, if the second tagged image (i) of said two tagged images (j, i) appears in said nearest visual neighbors $(N_k(j))$ of the first tagged image (j) of said two tagged images (j, i);

d.) Calculating a relevance score of said tag (t) for each tagged image (T) with respect to the visual content of said tagged image by performing a random walk model over said voting graph (G), whereby said random walk model includes a following probability to follow from a start node (i) to another node (j) of said voting graph (G) via an edge between them and a teleporting probability to teleport from said start (i) node to a random node of said voting graph (G).

2. Method according to claim 1, whereby the visual similarity between two images is calculated by a Gaussian kernel function.

3. Method according to claim 1 or 2 whereby said random walk model is an adaptive teleportation random walk model, whereby said teleporting probability of said adaptive teleportation random walk model depends from the numbers of edges of the start node (i) of said voting graph (G).

4. Method according to claim 3, whereby said teleporting probability of said adaptive teleportation random walk model is calculated by

$$(1-\alpha)+(1-c_i)\times\alpha$$

with

$$c_i = \frac{\left(d_i^+\right)^\gamma}{\max_j\left(d_j^+\right)^\gamma}$$

whereby $\alpha$ is said following probability, $d_i^+$ is the number of edges of said start node (i), $d_j^+$ is the number of edges of another node (j) and $\gamma$ is a control factor to control the degree of the impact of the number of edges.

5. Method according to one of claims 1 to 4 whereby said random walk model is an adaptive teleportation random walk model, whereby the process of said adaptive teleporting random walk model is calculated by

$$r_t(j) = \alpha\sum_i c_i P_{ij} r_{t-1}(i) + \alpha v_j \sum_i (1-c_i) r_{t-1}(i) + (1-\alpha)v_j$$

with

$$p_{ij} = \frac{\omega_{ij}}{\sum_{\kappa\in N_\kappa(i)} \omega_{i\kappa}}$$

$$c_i = \frac{\left(d_i^+\right)^\gamma}{\max_j\left(d_j^+\right)^\gamma}$$

whereby i is the start node, j is another node, $r_t$ is a vector whose i-th element $r_t(i)$ indicates the relevance score of node i at step t, $\alpha$ is said following probability, $v_j$ is the initial probabilistic relevance score of tag t at node j, P is an n-by-n transition matrix with an element $p_{ij}$ indicates the probability of transition from node i to node j, $w_{ij}$ is an edge-weight between node i and j and $N_k(i)$ is the k-nearest visual neighbors.

6. Method according to claim 5, whereby the edge-weight between two nodes of said voting graph is constant over the entire voting graph.

7. Method according to claim 5, whereby the edge-weight between two nodes (i, j) of said voting graph (G) is calculated from the visual similarity of said two nodes (i, j).

8. Computer program product including program code arranged to perform the method according to one of claim 1 to 7, if the program code is running on a computer.

Tagged
Images

k nearest neighbors (k = 5)

| | | | | | |
|---|---|---|---|---|---|
| 1 | | | | | |
| 2 | | | | | |
| 3 | | | | | |
| 4 | 2 | 3 | | | |
| 5 | | 2 | | | 1 |
| 6 | 2 | | | 4 | |

# Figure 1

Figure 2

Europäisches
Patentamt

European
Patent Office

Office européen
des brevets

# EUROPEAN SEARCH REPORT

Application Number

EP 14 17 5793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG LIU ET AL: "Tag ranking", 18TH INTERNATIONAL WORLD WIDE WEB CONFERENCE, MADRID, SPAIN, 2009.04.20 - 2009.04.24, 20 April 2009 (2009-04-20), pages 351-360, XP058025606, DOI: 10.1145/1526709.1526757 ISBN: 978-1-60558-487-4 * abstract; figures 1, 4-8 * * page 353, paragraph 2 - page 355, paragraph 2.3.2 * ----- | 1-8 | INV. G06F17/30 |
| X | BA QUAN TRUONG ET AL: "Content is Still King: The Effect of Neighbor Voting Schemes on Tag Relevance for Social Image Retrieval", PROCEEDINGS OF THE 2ND ACM INTERNATIONAL CONFERENCE ON MULTIMEDIA RETRIEVAL, ICMR '12, 5 June 2012 (2012-06-05), - 8 June 2012 (2012-06-08), pages 1-8, XP055153521, New York, USA DOI: 10.1145/2324796.2324808 ISBN: 978-1-45-031329-2 * abstract; figures 1,2 * * page 1, paragraph 1 - page 5, paragraph 3.2 * ----- -/-- | 1-8 | TECHNICAL FIELDS SEARCHED (IPC) G06F |

The present search report has been drawn up for all claims

| Place of search | Date of completion of the search | Examiner |
|---|---|---|
| Munich | 19 November 2014 | Laurentowski, A |

EPO FORM 1503 03.82 (P04C01)

Europäisches
Patentamt

European
Patent Office

Office européen
des brevets

# EUROPEAN SEARCH REPORT

Application Number

EP 14 17 5793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIRONG LI ET AL: "Learning Social Tag Relevance by Neighbor Voting", IEEE TRANSACTIONS ON MULTIMEDIA, IEEE SERVICE CENTER, PISCATAWAY, NJ, US, vol. 11, no. 7, 16 October 2009 (2009-10-16), pages 1310-1322, XP011346645, ISSN: 1520-9210, DOI: 10.1109/TMM.2009.2030598 * abstract; figures 1,2 * * page 1312, right-hand column, paragraph III - page 1314, right-hand column, last line * | 1-8 | |

TECHNICAL FIELDS
SEARCHED      (IPC)

The present search report has been drawn up for all claims

| Place of search | Date of completion of the search | Examiner |
|---|---|---|
| Munich | 19 November 2014 | Laurentowski, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)